# FASCICULE DE BREVET EUROPEEN

(11) **EP 0 705 147 B1**
(45) Date de publication et mention de la délivrance du brevet: **01.12.2004**
(21) Numéro de dépôt: 94911994.5
(22) Date de dépôt: 29.03.1994
(51) Int. Cl.: B05D 1/04, B05D 1/06, B05D 1/36, G21F 1/10

(54) **PROCEDE DE REVETEMENT DE SURFACES PLUS OU MOINS COMPLEXES, MATERIAUX POUR SA MISE EN OEUVRE ET PRODUITS OBTENUS**
VERFAHREN ZUR BESCHICHTUNG VON MEHR ODER WENIGER KOMPLEXER OBERFLÄCHE, MATERIALIEN ZU IHRER HERSTELLUNG UND SO HERGESTELLTE PRODUKTE
METHOD FOR COATING SURFACES OF VARYING COMPLEXITY, MATERIALS THEREFOR AND RESULTING PRODUCTS

(30) Priorité: 29.03.1993 FR 9303576
(43) Date de publication de la demande: 10.04.1996
(73) Titulaire: Massard, René, Gabriel, F-92230 Gennevilliers (FR)
(72) Inventeur: Massard, René, Gabriel, F-92230 Gennevilliers (FR)
(74) Mandataire: Schwartz, Thierry J.
(86) Numéro de dépôt international: PCT/FR1994/000352
(87) Numéro de publication internationale: WO 1994/022594

(56) Documents cités:
- BE-A- 655 826
- CA-A- 1 250 216
- CH-A- 197 934
- DE-A- 3 321 180
- DE-A- 3 730 477
- FR-A- 768 551
- FR-A- 1 176 997
- FR-A- 1 360 336
- FR-A- 1 436 685
- FR-A- 1 509 010
- FR-A- 1 557 084
- FR-A- 2 164 964
- FR-A- 2 244 614
- FR-A- 2 415 439
- FR-A- 2 429 620
- FR-A- 2 467 674
- GB-A- 1 096 453
- GB-A- 2 137 304
- GB-A- 2 186 214
- GB-A- 2 251 396
- US-A- 4 385 088
- US-A- 4 617 198

## Description

Il y a de nombreux cas où il est utile, voire nécessaire, de recouvrir des surfaces au moyen de produits de protection ou de décoration.

Il est rare que le revêtement fasse appel à un unique produit, susceptible à lui seul de satisfaire à la fois les nécessités du revêtement supposé en place et les modalités d'application.

C'est pourquoi, la plupart du temps, les revêtements sont effectués à partir de mélanges.

Or, quand un mélange convient parfaitement au revêtement d'une surface donnée, il est parfois inadapté aux méthodes rationnelles d'application ou vice versa, c'est-à-dire que l'on se trouve souvent en face de produits offrant de grandes qualités d'application mais ne donnant que des résultats insuffisants une fois mis en place.

Il est clair que l'on doit choisir un bon produit et non un mauvais, de sorte que l'on s'efforce de minorer les difficultés de mise en place.

C'est ainsi que l'on préfère appliquer trop de produit que de risquer des manques.

Outre que cela conduit à une augmentation de prix de revient, on n'obtient pas nécessairement un revêtement correct et l'on cumule alors tous les inconvénients à la fois : trop de produit et mauvais revêtement.

On connaît le procédé pour le revêtement de surfaces au moyen de plusieurs composants qui consiste à appliquer d'abord sur la surface une couche de résine de nature durcissable, puis à projeter au moins un matériau de nature fluide sur la résine avant que celle-ci n'ait durci.

On peut citer, à cet égard, les documents suivants : FR-A-2 164 964, GB-A-2 251 396.

La présente invention apporte une solution nouvelle qui ouvre de nouveaux domaines aux revêtements, du fait que l'on peut utiliser des produits qu'il est impossible d'envisager actuellement. Elle permet ainsi d'améliorer la qualité du revêtement et de disposer de couches très épaisses.

A cette fin, l'invention a pour objet un procédé pour le revêtement de surfaces selon la revendication 1.

Des modes préférentiels du procédé sont définis dans les revendications dépendents 2 à 19.

L'invention a également pour objet un dispositif destiné au revêtement de surfaces selon la revendication 20. Des modes préférentiels du dispositif sont définis dans les rev. dépendents 21 à 23.

L'invention a également pour objet un produit selon la revendication 24. Des modes préférentiels du produit sont définis dans les rev. dépendents 25 à 45.

Il est nécessaire d'employer des mélanges de matières pour revêtir des supports quand, notamment, on doit apporter à une résine des propriétés qu'elle ne peut pas avoir elle-même, ce qui oblige à lui adjoindre des agrégats ou charges choisis en fonction du but poursuivi.

Pour réduire la densité d'une résine donnée ou pour donner au revêtement terminé des qualités d'isolation thermique ou phonique, on incorpore à la résine des particules creuses. Au contraire, pour augmenter le poids volumique de la résine ou pour donner au revêtement terminé des qualités d'absorption acoustique, on ajoute à la résine des charges de haute densité.

Après avoir effectué un mélange, on doit l'appliquer sur le support à revêtir, soit par enduction manuelle à la brosse ou au rouleau, soit par projection au moyen d'un matériel comprenant un compresseur, un réservoir, des buses, etc.

On comprend que cette méthode d'application soit incompatible avec certains mélanges :
- si les particules ajoutées à la résine sont trop grosses, le mélange n'est plus projetable;
- si les particules ajoutées sont très légères, elles flottent à la surface de la résine au lieu de se mélanger de manière homogène;
- si les particules ajoutées sont très lourdes elles séjournent au fond du récipient dans lequel on effectue le mélange;
- si les particules ajoutées et la résine ont un différentiel de densité très grand, les particules sont trop lourdes pour rester à la place qu'elles occupent lors de la projection sur une surface verticale et, en glissant vers le bas, elles provoquent le phénomène de fluage de la résine.

En procédant selon l'invention, on applique séparément la résine et les ajouts, de sorte que l'on peut opérer différemment sur les divers matériaux mis en oeuvre.

En outre, la résine étant inerte, c'est-à-dire sans solvants, il est possible de déposer des couches très épaisses, de l'ordre de 1 millimètre, et de revêtir toutes sortes d'articles, même ceux qui sont faits en un matériau sensible.

La résine est de type polymérisable à froid, à deux composants.

Le matériau appliqué séparément, doit être de nature fluide pour pouvoir se disposer en couche. Le mot "fluide" doit être pris dans son acception la plus large puisque le matériau peut être liquide, pâteux, pulvérulent de différentes granulométries, fibreux etc. Les particules peuvent être régulières ou irrégulières : sphériques, polyédriques, en écailles, en billes, en grains ou en fibres.

On peut projeter la résine avec une pompe dite "airless" c'est-à-dire une pompe, de type connu en soi, qui transmet au matériau à projeter une pression de fluide par l'intermédiaire d'un piston ou autre organe mécanique qui isole le matériau du fluide moteur. Ce fluide peut lui-même être de l'air comprimé, un fluide hydraulique, etc.

Ainsi poussé mécaniquement, le matériau atteint une buse qui le pulvérise en très fines particules et celles-ci se déposent selon un film mince de meilleure qualité que celui obtenu par projection pneumatique car l'air a des effets négatifs sur le film tout entier.

Ayant mis la résine en place, on peut projeter les charges au moyen de pistolets pneumatiques et, bien entendu, par tout autre moyen aussi puisque l'opération est distincte de celle de la mise en place de la résine.

En ajustant le temps qui sépare la mise en place de la résine et la projection des charges, on peut choisir les meilleures conditions d'application en fonction du temps de durcissement.

Selon les caractéristiques thixotropiques de la résine, c'est-à-dire selon sa capacité à reprendre sa structure après avoir été pulvérisée (les gels, en particulier, sont cassés) on peut fortement diminuer, voire supprimer, le temps d'attente entre la fin de mise en place de la couche de résine et le début de mise en place de la couche de charge. Dans ce cas, on travaille pratiquement en continu.

Après avoir réalisé le revêtement complet : une couche de résine puis une couche de matériau complémentaire, on peut renouveler l'opération autant de fois que cela est nécessaire jusqu'à obtention de la quantité voulue de matière appliquée sur le support.

On obtient ainsi, alternativement, une couche de résine, une couche de matériau, une autre couche de résine, une autre couche de matériau etc.

On peut agir de la sorte avec une même résine et un même matériau pour obtenir une forte épaisseur finale d'un seul et même ensemble alors qu'il serait pratiquement impossible d'atteindre un bon degré de qualité en essayant de projeter en une seule fois la quantité désirée.

On peut aussi adopter des matériaux différents, avec une même résine ou avec des résines différentes.

Par exemple, il est possible de réaliser un revêtement de très bonnes performances en isolation acoustique en réalisant des couches, ou strates, de matériaux différents, absorbant des vibrations acoustiques inégales afin de couvrir un spectre de fréquences très étendu ou très ciblé, selon les cas, de manière beaucoup plus efficace que ce que l'on peut obtenir actuellement.

Cela peut être obtenu, par exemple, avec une couche de résine, une couche de poudre de plomb, une couche de résine, une couche d'isolants minéraux, une couche de résine, une autre couche de poudre de plomb, etc.

Il est possible de créer des revêtements conducteurs de l'électricité sur des supports eux-mêmes électriquement isolants, en projetant sur la résine un matériau à base de poudre d'aluminium dont les particules se touchent et ne sont pas entièrement enrobées de résine.

Comme déjà indiqué plus haut, on peut superposer plusieurs couches alternées pour obtenir plusieurs zones électriquement conductrices parallèles dans une masse de résine.

Le revêtement peut aussi présenter des qualités magnétiques en choisissant comme matériau appliqué sur la résine des poudres de fer ou d'oxyde de fer de tout type connu.

Pour donner au revêtement des qualités anticondensation, d'isolation thermique et/ou phonique, on choisit comme matériau additionnel un ou plusieurs produits connus pour ces qualités : vermiculite, mousse de matière synthétique (polyuréthane, polystyrène expansé et autres), billes de verre creuses, pierre ponce pulvérisée, argile expansé, et autres produits connus de l'homme de métier.

Parmi les nombreuses applications de l'invention, on peut citer :
- l'usage de matériaux inertes au goût, comme des écailles de verre pour les cuves et autres contenants destinés à des produits alimentaires tels que le vin;
- l'usage de matériaux à faible coefficient de frottement tels que le polytétrafluoréthylène ou le polyéthylène dont les qualités de "glisse" et d'antiadhérence peuvent être particulièrement recherchées, en particulier pour recouvrir des moules destinés au coffrage de béton quand on souhaite décoffrer rapidement sans pour autant étuver le béton, opération connue qui permet de décoffrer plus rapidement mais qui est une complication coûteuse;
- l'usage de matériaux antiusure : carbure de silicium, oxyde de zirconium, diverses matières céramiques et d'autres;
- l'usage de matériaux choisis pour leurs propriétés chimiques tels que l'or dont on connaît la grande résistance à tous les acides isolés, dont l'acide sulfurique par exemple;
- l'usage de matériaux électriquement isolants pour recouvrir, enrober, des éléments conducteurs comme des fils, des câbles, des barres, etc.
- l'usage de matériaux esthétiques permettant d'employer des supports laids mais utiles et bon marché puis de les recouvrir par une fine couche de finition qui les masque et leur donne un aspect attrayant et, le cas échéant, antipoussière;
- l'usage de particules décoratives distinctes du revêtement proprement dit pour donner un aspect de surface particulier : paillettes, poudres et autres.

Une application particulièrement intéressante de l'invention concerne le démantellement (ou la maintenance, la réparation) d'installations nucléaires.

En effet, il faut garantir une bonne protection biologique au personnel susceptible d'être en contact avec des objets irradiés afin d'éviter une contamination hors des sites protégés.

Lorsque l'on doit démonter et retirer des pièces irradiées, l'invention permet de les enrober complétement au moyen de résine et de matériaux lourds (plomb en particulier) en autant de couches que cela est nécessaire pour donner au cocon ainsi formé l'épaisseur voulue pour absorber les rayonnements ionisants jusqu'à élimination complète des objets.

L'application de la résine puis d'une poudre métallique colle les produits de contamination sur l'objet et bloque cette contamination en surface sous-jacente.

L'objet à traiter peut être individuel, c'est-à-dire un corps aux formes relativement simples : tuyau, réservoir, container etc. ou bien, au contraire, être formé de plusieurs éléments que l'on veut conserver assemblés : une vanne et son mécanisme de manoeuvre, un distributeur comprenant plusieurs brides de raccordement à des conduites, etc.

Après traitement comme on vient de le décrire, on obtient un produit conforme à l'invention qui est, pour l'essentiel, recouvert d'un revêtement protecteur, ou cocon, permettant de l'extraire d'un site protégé, de le manipuler, de le stocker et de le transporter avec une sécurité considérablement accrue par comparaison avec ce que l'on peut espérer des méthodes connues jusqu'à ce jour, hormis les procédés lourds, complexes et coûteux qui sont malcommodes et longs à mettre en oeuvre.

L'invention permet un intervention à distance car on peut automatiser individuellement les deux modes d'application différents : l'un pour la résine, l'autre pour le matériau additionnel.

On parvient ainsi à isoler, des objets simples ou complexes, contaminés, irradiés, en utilisant une ou plusieurs résines et une ou plusieurs couches de charge à base de plomb, toutes choses impossibles à réaliser de manière aussi simple et économique avec les moyens actuels.

En appliquant le revêtement par pulvérisation électrostatique on peut réaliser un cocon de protection tout autour d'objets de formes complexes et/ou d'accès difficile : tubes, structures diverses, échelles, coffrets, appareils, moteurs, vérins, chaînes etc. car ce procédé, connu en soi, permet aux particules de résine et de matériau additionnel de contourner les objets et de se déposer aussi bien sur leurs parties avant que sur leurs parties arrière, et aussi bien extérieurement qu'intérieurement lorsque les objets creux ne sont pas excessivement longs.

A noter que l'invention permet une telle application électrostatique contrairement aux méthodes connues qui ne peuvent pas mettre en oeuvre un procédé électrostatique avec des résines fortement additionnées de charges lourdes, à masse volumique élevée.

Comme l'invention est applicable aussi bien au cas où le support est conducteur qu'à celui où le support est isolant, on peut mettre en place un revêtement électriquement conducteur sur un support neutre (bois, béton ou autre) pour réaliser une cage de Faraday qui présente l'avantage de protéger une installation contre les risques de foudre ou d'assurer la qualité de transmissions hertziennes.

La mise en place de la résine d'abord et d'un matériau électriquement conducteur ensuite, permet d'obtenir des effets différents : par exemple étanchéité (qui est une part importante de l'opération dite de "tropicalisation" d'un matériel), et conductibilité électrique.

L'invention permet aussi d'obtenir des produits ayant des caractéristiques mécaniques complexes, alliant des qualités différentes de la matière du support de base, de résines et de matériaux additionnels.

Il y a des cas où l'on souhaite disposer d'un élastomère souple mais rigidifié.

S'il était enfermé dans un boîtier rigide, ses qualités d'élasticité seraient perdues. Utilisé en l'état, il reste un élastomère flexible et déformable.

Actuellement, on ne peut réaliser cette combinaison qu'en noyant des charges dans la résine (mais on ne peut plus appliquer le mélange au pistolet) ou en incorporant à la résine une armature telle qu'un grillage, un tissu de fibres de verre et analogues.

Ce résultat est médiocre car il est toujours obtenu au détriment d'au moins une des qualités des matériaux de base.

Avec l'invention, on applique sur l'élastomère une résine, puis on projette sur la résine non encore complétement durcie un agrégat très fin tel que de la poudre de silice à saturation.

Cet agrégat pénètre légèrement dans la résine, puisque l'on peut tenir compte de manière très précise de sont état de dureté, et crée une armature en surface (et non plus au coeur de la résine) due à la forte densité des particules d'agrégat, ce qui procure une coque dont la rigidité est exactement celle que l'on désire, sans définitivement neutraliser les qualités de l'élastomère.

Une autre application intéressante de l'invention concerne les banches, panneaux ou assemblages de structures devant servir de coffrage à des ouvrages ou des objets coulés en béton.

Souvent faits en bois, ces éléments sont des panneaux légers qui permettent de réaliser facilement des structures devant créer des formes et assemblages complexes.

Mais ces panneaux, surtout en bois, présentent des inconvénients :
- le béton en séchant laisse s'écouler de l'eau mélangée à des résidus minéraux (nommée "laitance" en raison de sa couleur blanchâtre) qui crée des épaufrures et rend difficile le démoulage du béton, celui-ci devant subir des traitements mécaniques ultérieurs : ponçage, meulage, ragréage;
- des clous sont utilisés pour maintenir les panneaux en bois et l'absence d'étanchéité qu'ils créent provoque des gonflements des panneaux et leur dégradation rapide, de sorte que l'on tente de retarder ces inconvénients en plaçant du mastic sur les clous, ne serait-ce que pour obtenir un meilleur aspect du béton après démoulage;
- les panneaux peuvent être revêtus d'un film protecteur collé, notamment sous forme d'une feuille chargée d'ébonite, mais alors on ne peut plus y planter de clous car ils font éclater le film protecteur et provoquent par conséquent une rupture de l'étanchéité;
- les structures complexes présentent des angles et, à l'endroit de ces angles, le béton est nettement marqué par les panneaux, ce qui oblige à des reprises pour corriger les défauts d'aspect;
- pour éviter que le béton ne colle aux panneaux de bois, on enduit ceux-ci avec des produits dits "de démoulage" de nature huileuse, qui se fixent par adsorption en créant des irrégularités, ce qui est l'une des causes du "bullage" du béton ainsi nommé en raison de la présence d'excroissances en forme de bulles (l'air de la vibration du béton cause aussi le bullage);

Les irrégularités de surface (telles que le bullage) et les traces huileuses rendent difficile une application ultérieure d'un enduit.

Elles provoquent des altérations de couleur sur les bétons architectoniques qui restent apparents, bruts de décoffrage, précisément parce qu'ils sont conçus pour avoir une apparence agréable sans nécessiter la pose d'un enduit de finition ou d'un parement.

Conformément à l'invention, on applique une résine directement sur le bois convenablement nettoyé, afin d'obtenir après durcissement un film protecteur résistant aux chocs, impacts et frottements, film qui est en outre étanche, antiadhérent du béton et clouable sans éclatement.

On choisit pour cela des résines qui sont régénérables et réparables sur les chantiers en cas de détérioration accidentelle ou d'usure importante due aux contraintes de service.

Grâce à l'étanchéité du bois, on élimine les épaufrures du béton et l'on assure la stabilité dimensionnelle des panneaux.

La résine recouvre les clous et les cadres métalliques en éliminant les possibilités d'infiltration.

Sa surface extrêmement lisse donne au béton une qualité d'aspect excellente.

Résistante aux chocs, la résine n'éclate pas lors de la mise en place de clous et permet de conserver l'étanchéité de l'ensemble.

On peut choisir une résine ayant de bonnes qualités thixotropiques grâce auxquelles on peut compenser les lignes aiguës des angles de structures complexes en déposant, là où c'est nécessaire, une quantité de résine plus importante.

La présence de ce film rend inutile le recours à des produits de démoulage huileux puisque la résine de base est antiadhérente vis-à-vis du béton.

On obtient, par conséquent, une meilleure finition du béton coulé, un aspect excellent puisque le béton n'est pas imprégné de produits huileux et une plus grande longévité des panneaux car leur dégradation vient essentiellement des défauts d'étanchéité et des chocs.

On connait tous les avantages de la projection électrostatique et l'on a indiqué plus haut que ce procédé est inutilisable avec des mélanges de type connu comprenant une résine et une charge, notamment parce que la charge est souvent trop lourde pour les appreils de projection ou inapte à la charge électrique de ses particules.

La présente invention permet de généraliser l'emploi de la projection de substances par voie électrostatique.

La résine obtenue pouvant recevoir une charge électrique, se met en place aussi bien que le permet le procédé de la projection électrostatique de type connu. Elle se dépose sous forme d'un film mince et continu, sans microporosité, d'épaisseur régulière, grâce au brouillard de fines particules créées lors de la projection et qui se placent sur le support en occupant les vides subsistant entre les particules déjà déposées car les particules de même signe se repoussent.

Il faut que le support soit de signe contraire à celui des particules chargées de la résine pour attirer ces particules.

Lorsqu'il est de nature conductrice, on le met à la masse tandis que les particules sont chargées électriquement.

Quand il est de nature électriquement isolante, ou bien quand il a une structure ou une surface incompatible avec sa polarisation, on le soumet à un traitement préalable qui consiste à l'enduire au moyen d'une solution d'un agent conducteur dissous dans un liquide tel que de l'eau, à raison de quelques grammes par litre (10 g/l par exemple) puis à laisser s'évaporer le liquide afin que seul l'agent conducteur subsiste sous forme d'un film extrêmement mince, mesuré en angström, c'est-à-dire ayant une épaisseur de l'ordre de grandeur de molécules.

Après ce traitement sur le support isolant, celui-ci peut recevoir un revêtement électrostatique comme on l'a décrit ci-dessus.

Cependant, un tel traitement n'est pas toujours nécessaire si l'on prête attention à l'humidité du support devant être recouvert. Un degré d'humidité relativement élevé donne au support une conductivité électrique suffisante pour l'application électrostatique.

Avec ou sans mise en oeuvre de ce traitement, on peut appliquer un revêtement sur des articles en bois : mobilier, huisseries, planchers, etc. pour obtenir soit un effet utilitaire tel qu'étanchéité, protection antiparasites et autres, soit également esthétique et, notamment, un revêtement de courtes fibres appelées "flocs", les caractéristiques d'un tel flocage étant bien connues en elles-mêmes de l'homme de métier.

Cela permet de créer des meubles d'extérieur particulièrement résistants aux conditions atmosphériques agressives : pluie, neige, soleil, même en utilisant un matériau de départ de qualités modestes tel que du carton, des éléments de particules, etc.

Le revêtement peut, ensuite, consolider le support et lui donner un aspect flatteur. Un matériau minéral dont les particules ont une granulométrie assez forte peuvent, par exemple, donner à l'article revêtu une très grande rigidité et un bel aspect de pierre.

On peut aussi appliquer ce traitement préalable non plus au support lui-même mais, par exemple, à une couche de matériau.

La généralisation de l'application par pulvérisation électrostatique à tous les supports et dans les circonstances les plus difficiles, donne des possibilités nouvelles.

Comme on l'a indiqué plus haut, on peut recouvrir des objets contaminés ou irradiés même s'ils sont isolants, en vue de leur manipulation et de leur évacuation, dans l'industrie nucléaire, dans l'industrie chimique ou dans l'industrie biologique, c'est-à-dire chaque fois que l'on doit manipuler des objets dangereux nécessitant leur neutralisation préalable et cela, quelle que soit la complexité de leurs formes ou leur difficulté d'accès.

L'invention rend possible le revêtement de très grandes surfaces telles que des terrasses.

Pour cela, on dispose d'abord, au rouleau ou à la brosse, une résine rendue conductrice et assurant l'étanchéité, puis on projette un matériau additionnel au moyen de pistolets à charge électrostatique.

La mise en place électrostatique permet d'utiliser comme matériau additionnel des produits fibreux tels que ceux connus sous le nom de "flocs" dont la charge permet de les disposer automatiquement dans une direction perpendiculaire au plan du support auquel ils donnent un aspect et un toucher velouté.

Le flocage ayant en outre des qualités antidérapantes, l'invention permet de l'utiliser en tous lieux tels que cuisines, salles d'eau, laboratoires et ateliers et sur des objets ne devant pas être glissants.

L'application électrostatique d'un revêtement conforme à l'invention sur un support poreux, caverneux, c'est-à-dire présentant en surface des alvéoles provenant de sa constitution en cellules ouvertes, présente cette particularité que la résine et le matériau se déposent préférentiellement en surface et non dans les parties creuses. On peut ainsi déposer un revêtement esthétique, antipoussières, sur un support d'aspect médiocre.

L'usage de résines sans solvant permet de s'affranchir des problèmes de prise et de retrait qui sont particulièrement à craindre pour des dépôts en couches relativement épaisses.

Avec l'invention, on peut donc réaliser des dépôts très minces, minces, épais ou très épais (de l'ordre des millimètres).

L'invention sera mieux comprise par la description détaillée ci-après faite en référence au dessin annexé. Bien entendu, la description et le dessin ne sont donnés qu'à titre d'exemple indicatif et non limitatif.
La figure 1 est une vue schématique d'un dispositif conforme à l'invention.
La figure 2 est une vue schématique partielle en coupe d'un produit conforme à l'invention, constitué par un ensemble à trois couches, la couche médiane étant un dépôt électrostatique d'un matériau conducteur et résistant.
La figure 3 est une vue schématique partielle en coupe montrant un revêtement de sol conforme à l'invention, contenant l'ensemble à trois couches de la figure 2.
La figure 4 est une vue schématique en coupe d'un tube conforme à l'invention, contenant un manchon à grande surface spécifique et portant une couche formée par dépôt électrostatique d'un matériau conducteur et résistant.
La figure 5 est une vue schématique partielle d'un treillis recouvert d'un produit réalisé par dépôt électrostatique d'un matériau conducteur et résistant.
La figure 6 est une vue schématique partielle en coupe d'un produit conforme à l'invention, constitué par deux tôles enserrant une couche médiane formée par un dépôt électrostatique d'un élastomère.

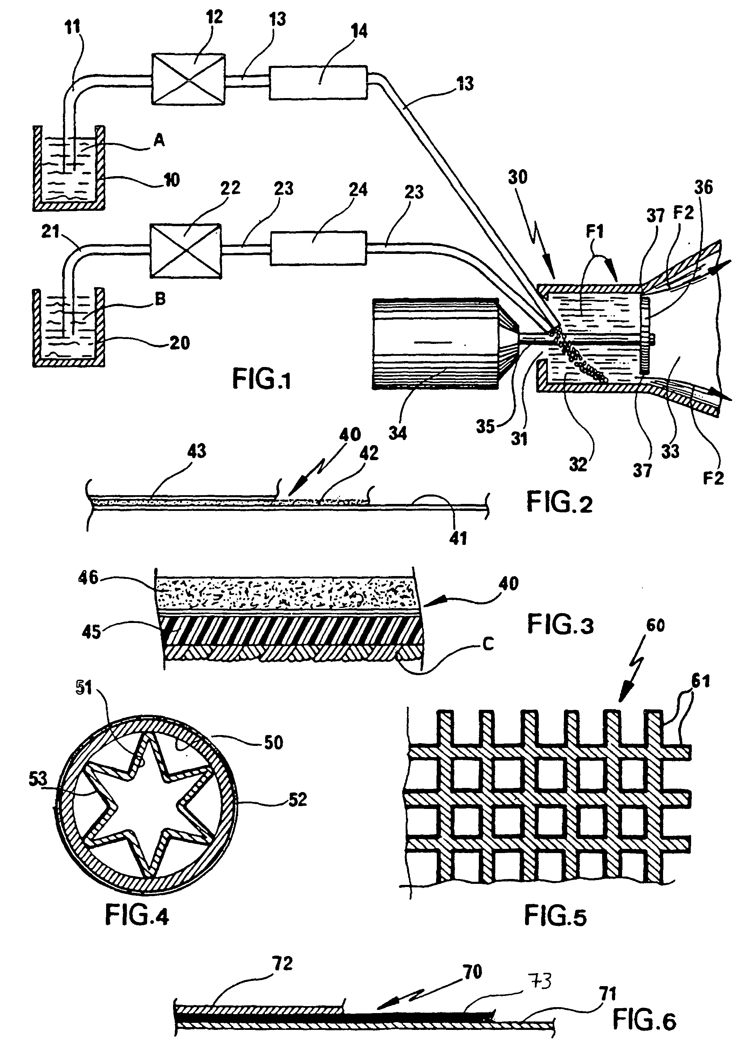

Comme cela est illustré par la figure 1, on préconise d'utiliser des résines sans solvants à deux composants amenés individuellement à un dispositif de pulvérisation où il sont intimement mêlés.

L'absence de solvants permet d'éviter les inconvénients liés aux problèmes de séchage et d'évaporation : on peut appliquer une couche extrêmement mince sans craindre les discontinuités qui ne manqueraient pas de se produire lors de l'évaporation de solvants. On peut, à l'inverse, déposer en une seule fois une couche épaisse alors que la présence de solvants nécessiterait d'agir en plusieurs couches superposées, chacune d'elles devant d'abord être sèche, c'est-à-dire exempte des solvants évaporés.

Sur cette figure, on a représenté schématiquement un premier réservoir 10 pour un premier composant A qui est aspiré dans un conduit 11 par une pompe 12 en aval de laquelle se trouve un conduit 13 sur lequel est monté un élément de chauffage 14 réglé pour donner au composant A une viscosité exactement adaptée aux impératifs de projection, compte tenu de différents facteurs : propriétés du composant A, température ambiante, diamètre du conduit, etc.

Au-delà de l'élément de chauffage 14, le conduit 13 s'étend jusqu'à une ouverture axiale 31 d'une chambre 32 d'une turbine de pulvérisation désignée par la référence générale 30.

Un second réservoir 20 contient un second composant B qui est aspiré dans un conduit 21 par une pompe 22 en aval de laquelle se trouve un conduit 23 sur lequel est monté un élément chauffant 24 réglé pour donner au composant B une viscosité exactement adaptée aux impératifs de projection, compte tenu des différents facteurs déjà énoncés plus haut et qui peuvent nécessiter un traitement spécifique à chacun des deux composants A et B.

Au-delà de l'élément de chauffage 24, le conduit 23 s'étend jusqu'à l'ouverture axiale 31 de la chambre 32.

On remarque que les conduits 13 et 23 sont convergents et que leurs extrémités ouvertes sont proches l'une de l'autre.

On remarque aussi que les conduits 13 et 23 aboutissent à la partie supérieure de la chambre 32, de sorte que les deux composants A et B tombent par gravité dans ladite chambre 32, sans qu'il soit nécessaire de les propulser avec force, les pompes 12 et 22 fonctionnant au régime le plus bas, juste nécessaire à la mise en mouvement du composant A ou B correspondant.

C'est, d'ailleurs, une caractéristique de l'invention que de choisir des pompes 12 et 22 de type à haute pression que l'on fait volontairement fonctionner à basse pression afin d'obtenir une vitesse d'écoulement faible et des pertes de charge proportionnelles à la longueur du circuit, tous paramètres qui doivent être pris en compte.

Cela n'est pas équivalent à l'usage de pompes à basse pression car celles-ci sont peu étanches et continuent de fonctionner malgré des variations possibles de la résistance à l'écoulement en aval.

De telles variations peuvent se produire en fonction de différents facteurs affectant la liberté d'écoulement et, notamment, la viscosité du composant transporté.

Ces inconvénients ne se produisent pas avec des pompes à haute pression qui sont conçues pour avoir une étanchéité excellente, de sorte que les variations de la résistance à l'écoulement ne provoquent pas de fuites, le composant s'écoulant toujours convenablement et à basse pression.

La conséquence de ces dispositions est que les composants A et B s'entrelacent dès qu'ils quittent les conduits 13 et 23 et tombent dans la partie inférieure de la chambre 32 en se mêlant intimement.

On rappelle que la turbine 30, de type connu en soi, comprend d'une part un corps monté rotatif, composé de la chambre 32 et d'une trompette 33 et d'autre part un moteur 34 ayant un arbre de sortie 35 fixé au fond 36 de la chambre 32, ce fond 36 étant échancré d'encoches périphériques 37.

Le fonctionnement du dispositif qui vient d'être décrit est le suivant :

Les deux composants A et B sont traités individuellement, aussi bien pour leur mise en mouvement que pour leur mise en température et sont donc amenés séparément à la turbine 30 où ils se mélangent au dernier moment, ce qui évite tous les problèmes liés à une polymérisation prématurée et pratiquement impossible à régler selon les impératifs de la pulvérisation.

Le moteur 34 met en rotation la chambre 32 par son fond 36, selon la flêche F1, à une vitesse telle que la force centrifuge qui en résulte pulvérise le mélange des deux composants A et B et l'envoie contre les parois de la chambre 32, d'où il sort par les encoches périphériques 37 du fond 36, vers la trompette 33 et de là sur la zone de pulvérisation, selon les flêches F2.

La figure 2 illustre un produit 40 conforme à l'invention, comprenant un film étanche 41, qui peut être créé en atelier par pulvérisation sur un support non représenté, une couche 42 d'un matériau déposé par pulvérisation, conducteur de l'électricité et constituant simultanément une résistance et, enfin, une couche protectrice 43 en un matériau isolant tel que du polyuréthane.

La couche 42 peut comprendre, par exemple, une fine poudre de cupronickel déposée conformément au procédé de l'invention, sur le film 41 non encore polymérisé, selon une épaisseur de 10 à 50 µ par exemple.

En alimentant en énergie électrique la couche conductrice-résistante 42, on dispose d'une résistance chauffante par effet Joule sur toute la surf ace du produit 40.

On peut également constituer la couche 42 en déposant plusieurs strates successives, selon la puissance de chauffage instantanée requise.

Le produit peut, par exemple, avoir une épaisseur totale de 100 µ, selon l'épaisseur de la couche conductrice 42.

Ce produit 40, on le comprend, associe les qualités d'isolation et de protection des couches extérieures 41 et 43, tout en bénéficiant des capacités auxiliaires de chauffage de la couche 42.

Le produit 40 peut avoir de multiples applications :
- intégration à des parois radiantes : planchers, plafonds, murs et cloisons qui ont l'avantage de présenter une surface chauffante continue et très étendue et non plus des zones restreintes comme cela est le cas actuellement;
- revêtements continus sol-parois-plafond pour créer une cage de Faraday, à des fins techniques de protection pour les locaux contenant des équipements électriques et électroniques, comme les tours de contrôle par exemple;
- équipement de locaux pour le mûrissage de fruits;
- locaux pour animaux, porcheries et "maternités" de porcs;
- couveuses;
- parois de piscines;
- jardinières et serres pour la culture des végétaux;
- parois des carosseries de réfrigérateurs et chambres froides, en vue du dégivrage;
- coffrages chauffants pour coulée de béton;
- toitures, soit à l'intérieur pour lutter contre la condensation, soit à l'extérieur pour empêcher la formation de manteaux neigeux;
- panneaux de signalisation routière;
- protection de bâtiments contre le posé d'oiseaux tels que les pigeons des villes;
- emballage et conditionnement;
- protection d'appareils électriques et électroniques, notamment contre les interférences (téléphones portables et radio-téléphones, équipements de bord des avions, récepteurs, etc.;
- chauffe-plats;
- étendage selon de très grandes surfaces, en montagne, pour éviter la formation de neige dans des endroits dangereux;
- revêtement de toutes sortes d'articles non conducteurs en eux-mêmes, en vue de leur chauffage par induction (biberons par exemple).

Les qualités anticorrosion des couches extérieures 41 et 43 s'ajoutent aux qualités d'isolation et le chauffage intégré rend les matériaux de ces couches 41 et 43 moins fragiles par grand froid.

La figure 3 est un exemple d'une telle application à un revêtement de sol : route, piste d'aéroport et analogue.

Sur le sol proprement dit C, on dispose un matériau thermiquement isolant 45, puis sur ce matériau 45, on étend le produit 40 tel qu'on l'a décrit plus haut et, enfin, on coule une dalle de béton 46.

Le chauffage issu de la couche 42 du produit 40, même à température modeste, mais constante et prolongée dans le temps, intéresse toute la masse du béton dont la surface extérieure est suffisamment chaude pour empêcher la formation de verglas ou pour faire fondre la neige dès qu'elle est tombée.

Le procédé conforme à l'invention permet aussi de réaliser des produits autres qu'en feuilles minces.

C'est le cas, en particulier, des tubes et autres corps en volume, creux ou pas.

Il existe de nombreux cas où des tubes doivent être traités contre la corrosion et parfois chauffés.

Le procédé de l'invention permet d'obtenir à la fois la protection anticorrosion et le chauffage.

Pour cela, on applique à l'extérieur une couche d'accrochage (équivalente au film 41), puis une couche de cupronickel en poudre (équivalente à la couche 42), puis un revêtement protecteur extérieur (équivalent à la couche protectrice 43).

Il est bon de réserver une marge de quelques centimètres à chaque extrémité des tubes, en s'abstenant d'y placer un revêtement conforme à l'invention, ce qui permet de disposer de place pour effectuer des soudures de raccordement.

A noter que l'on peut provoquer le chauffage de la couche intérieure avant la soudure, afin de faciliter celle-ci.

On peut aussi utiliser le chauffage des parois des tubes, non seulement pour les protéger du froid extérieur mais également pour chauffer les produits qu'ils transportent, notamment ceux qui deviennent visqueux avec les basses températures (hydrocarbures lourds par exemple).

Ainsi, on peut réaliser des chauffe-eau par revêtement extérieur de tuyaux, en particulier disposés en serpentin : la couche intérieure assure le chauffage tandis que le revêtement extérieur assure l'isolation thermique.

Si les tubes sont déjà mis en place, on peut les habiller de coquilles réalisées par moulage et revêtues intérieurement et/ou extérieurement selon l'invention.

Le revêtement disposé à l'extérieur des tubes et tuyaux permet d'éviter la condensation.

On peut augmenter la surface spécifique d'échange entre un tuyau et les produits qu'il transporte comme cela a été schématisé sur la figure 4 :

A l'intérieur d'un tuyau 50, on place un manchon continu 51 dont la section est différente de celle de l'intérieur du tuyau 50. Ici, le tuyau 50 a une section circulaire alors que le manchon 51 a une section en étoile et n'est au contact de la paroi intérieure du tuyau 50 que par ses sommets.

Le tuyau 50 porte un revêtement conforme à l'invention 52 comprenant une couche interne chauffante et le manchon 51 porte lui aussi un revêtement conforme à l'invention 53 comprenant une couche interne chauffante.

La surface chauffante totale est considérable et l'on n'a pas sérieusement diminué la section de passage du tuyau 50.

Bien entendu, le manchon peut avoir toute autre section que celle d'une étoile.

Comme le revêtement conforme à l'invention est étanche, on peut traiter des articles en matériaux bon marché, sensibles aux liquides, tels que du carton puisque l'article est entièrement revêtu.

C'est le cas du manchon 51.

Outre les tubes et tuyaux, on peut revêtir d'autres articles tels que les câbles de transport d'énergie électrique : lignes de transport ou caténaires de chemins de fer.

L'épaisseur du revêtement peut aisément être adaptée aux caractéristiques du courant électrique transporté.

Le procédé conforme à l'invention s'adapte particulièrement bien à la constitution de produits multicouches.

Ainsi, on peut prévoir que le produit contient une ou plusieurs couches de magnétite micronisée, permettant de retirer le revêtement au moyen d'un champ magnétique.

Cela peut être intéressant pour le conditionnement ou pour l'intérieur de coffrages exigüs.

Parmi les articles de formes complexes susceptibles d'être revêtus selon l'invention, on peut citer les grilles, grillages, treillis et analogues.

Sur la figure 5, on a représenté un treillis 60 qui est entièrement revêtu, enrobé, et donc entièrement protégé par un revêtement 61 comprenant une couche interne chauffante (non individualisée, le revêtement 61 étant du même type que le produit 40 de la figure 2).

Un tel treillis 60 peut être utilisé pour l'armature du béton, car il est entièrement protégé contre la corrosion et peut, en outre, être spécialement conçu pour son adhérence au béton.

Bien entendu, l'invention peut être appliquée à la protection de tous les fers à béton, simples ou complexes et pas seulement aux treillis.

Un grillage ainsi revêtu est chauffant et peut recevoir de nombreuses applications telles que les clôtures de poulaillers et autres cages ou enclos pour animaux.

Un produit traité selon le procédé de l'invention ne constitue pas un pont thermique, de sorte que le procédé de l'invention est particulièrement précieux dans le bâtiment puisqu'il permet de réaliser des huisseries, des chéneaux ou des pièces de faîtières.

Appliqué sous forme transparente, un produit selon l'invention permet également de rendre isolantes et chauffantes des parties de bâtiment transparentes ou translucides telles que des vitres, glaces et lanterneaux.

Sur la figure 6, on a représenté schématiquement un produit 70 conforme à l'invention, constitué par deux tôles extérieures respectivement 71 et 72, enserrant une couche d'un produit élastomère 73.

La couche 73 peut être déposée conformément à l'invention par pulvérisation électrostatique selon des épaisseurs très varaibles selon les cas, de moins de 50 µ à plus de 120 µ.

La matière élastomère peut être une résine de polyuréthane à deux composants, sans solvant, polymérisable à froid.

Cette matière peut recevoir des charges et additifs tels que des alliages pour le soudage, des produits isolants phoniquement à l'égard de certaines fréquences sonores bien caractérisées (plomb en particulier).

## Revendications

1. Procédé pour le revêtement de surfaces au moyen de plusieurs composants (A, B) en utilisant des moyens électrostatiques, **caractérisé en ce que**,
• on conduit les composants (A, B) aux moyens électrostatiques (30, 34, 35, 36) séparément, à basse pression et à une vitesse d'écoulement faible,
• on mélange intimement les composants (A, B) au dernier moment avant projection de façon à obtenir une résine,
• la résine étant de nature durcissable à froid, inerte, c'est-à-dire ne contenant aucun solvant,
• on forme une première couche sur la surface à revêtir en projetant à basse pression la résine à au moins deux composants (A, B) par lesdits moyens électrostatiques (30, 34, 35, 36),
• puis on forme au moins une seconde couche distincte et solidaire de la première en pulvérisant au moins un matériau de nature fluide sue cette première couche de résine avant que celle-ci n'ait durci.

2. Procédé selon la revendication 1, **caractérisé en ce que** l'on renouvelle les opérations de projection et de pulvérisation au moins une fois sur une même surface afin d'obtenir sur celle-ci au moins deux couches de résine séparées par une épaisseur de matériau et au moins deux épaisseurs de matériau séparées par une couche de résine.

3. Procédé selon la revendication 1, **caractérisé en ce que** le matériau est solide.

4. Procédé selon la revendication 3, **caractérisé en ce que** le matériau solide est minéral.

5. Procédé selon la revendication 4, **caractérisé en ce que** le matériau solide et minéral est métallique.

6. Procédé selon la revendication 3, **caractérisé en ce que** le matériau solide est végétal.

7. Procédé selon la revendication 3, **caractérisé en ce que** le matériau solide est synthétique.

8. Procédé selon la revendication 3, **caractérisé en ce que** le matériau se présente sous forme de fragments de granulométrie quelconque comprise entre celle d'une fine poudre et celle d'un sable grossier.

9. Procédé selon la revendication 1, **caractérisé en ce que** le matériau est pâteux.

10. Procédé selon la revendication 1, **caractérisé en ce que** le matériau est liquide.

11. Procédé selon la revendication 1, **caractérisé en ce que** le matériau est fibreux.

12. Procédé selon la revendication 1, **caractérisé en ce que** l'on pulvérise la résine sous forme liquide au moyen d'une pompe à poussée mécanique.

13. Procédé selon la revendication 1, **caractérisé en ce que** l'on pulvérise la résine à au moins deux composants (A et B), au moyen d'autant de pompes distinctes (12 et 22).

14. Procédé selon la revendication 13, **caractérisé en ce que** l'on pulvérise les composants (A et B) de la résine au moyen de pompes (12 et 22) de type "à haute pression" que l'on fait fonctionner à basse pression.

15. Procédé selon la revendication 14, **caractérisé en ce que** l'on chauffe les composants (A et B) en aval des pompes (12 et 22) par des moyens (14 et 24) distincts et réglables individuellement.

16. Procédé selon la revendication 1, **caractérisé en ce que** l'on projette le matériau au moyen d'un pulvérisateur pneumatique.

17. Procédé selon la revendication 1, **caractérisé en ce que** l'on applique le matériau par projection de type électrostatique.

18. Procédé selon la revendication 1, **caractérisé en ce que** les matériaux de différentes couches sont de natures différentes.

19. Procédé selon la revendication 1, **caractérisé en ce que** la surface est celle d'un matériau isolant.

20. Dispositif pour le revêtement de surface par plusieurs composants (A-B) comprenant des moyens de propulsion et des moyens électrostatiques (30, 34, 35, 36) pour la mise en oeuvre du procédé selon la revendication 1.

21. Dispositif selon la revendication 20, **caractérisé en ce que** les moyens de propulsion comprennent une pompe (12-22) pour chaque composant (A-B) et un moyen de chauffage (14-24) pour chaque composant (A-B), réglable individuellement et situé en aval de la pompe (12-22) correspondante.

22. Dispositif selon la revendication 21, **caractérisé en ce que** les pompes (12 et 22) sont raccordées à des conduites de sortie (13 et 23) dont les extrémités ouvertes sont convergentes et dirigées de haut en bas, en vue de favoriser, par gravité naturelle, un entrelacement des composants (A et B) coulant par lesdites extrémités.

23. Dispositif selon la revendication 22, caractérisé en ce qu'il comprend une turbine (30) ayant une chambre (32) reliée à un moteur (34) d'entraînement en rotation, les extrémités convergentes des conduites (13 et 23) débouchant dans ladite chambre (32) par une ouverture axiale (31).

24. Produit dont au moins une partie de la surface présente un revêtement obtenu par le procédé selon la revendication 1.

25. Produit selon la revendication 24, **caractérisé en ce que** le revêtement comprend au moins une couche de résine durcie et inerte, c'est-à-dire dépourvue de tout solvant, et au moins une couche extérieure d'un matériau distinct et solidaire de la résine.

26. Produit selon la revendication 25, **caractérisé en ce que** le matériau est de nature électriquement isolante.

27. Produit selon la revendication 25, **caractérisé en ce que** le matériau est électriquement conducteur.

28. Produit selon la revendication 27, **caractérisé en ce que** le matériau électriquement conducteur est également résistant afin de pouvoir être le siège de l'effet Joule et est avantageusement recouvert d'un matériau de protection.

29. Produit selon la revendication 27, **caractérisé en ce que** le matériau électriquement conducteur est de nature magnétisable.

30. Produit selon la revendication 27, caractérisé en ce qu'il est constitué par un câble de transport d'énergie électrique, notamment un caténaire.

31. Produit selon la revendication 29, caractérisé en ce qu'il est lui-même en matériau électriquement isolant.

32. Produit selon la revendication 29, caractérisé en ce qu'il est lui-même en matériau irradié.

33. Produit selon la revendication 29, caractérisé en ce qu'il est individuel

34. Produit selon la revendication 33, caractérisé en ce qu'il est constitué de deux parties planes assemblées, notamment des tôles, entre lesquelles se trouve une couche d'élastomère sans solvant.

35. Produit selon la revendication 34, **caractérisé en ce que** l'élastomère contient des charges.

36. Produit selon la revendication 35, **caractérisé en ce que** les charges ont des propriétés d'isolation, notamment phoniques.

37. Produit selon la revendication 35, **caractérisé en ce que** les charges ont des propriétés favorisant la soudure.

38. Produit selon la revendication 29, caractérisé en ce qu'il est formé de plusieurs éléments lui donnant des formes complexes dont les surfaces sont revêtues au moins en partie.

39. Produit selon la revendication 38, caractérisé en ce qu'il constitue un tube contenant un manchon de section différente, de surface spécifique supérieure à celle du tube et qui n'est au contact de la paroi intérieure du tube que par des fractions de sa surface.

40. Produit selon la revendication 38, caractérisé en ce qu'il est formé par l'assemblage de fils croisés pour constituer une grille, un treillis ou analogue.

41. Produit selon la revendication 40, caractérisé en ce qu'il est destiné à l'armature de béton.

42. Produit selon la revendication 38, caractérisé en ce qu'il constitue un élément de construction.

43. Produit selon la revendication 42, caractérisé en ce qu'il est transparent est constitue une paroi telle qu'une vitre.

44. Produit selon la revendication 42, caractérisé en ce qu'il est translucide et constitue une paroi telle qu'un lanterneau.

45. Produit selon la revendication 25, caractérisé en ce qu'il est lui-même de nature souple tandis que le revêtement est rigide.

## Patentansprüche

1. Verfahren zum Beschichten von Oberflächen mittels mehrerer Komponenten (A, B) unter Verwendung einer elektostatischen Vorrichtung, **gekennzeichnet durch** folgende Verfahrensschritte:
• getrenntes Leiten der Komponenten (A, B) unter niedrigem Druck und mit einer geringen Strömungsgeschwindigkeit zu der elektrostatischen Vorrichtung (30, 34, 35, 36),
• intensives Vermischen der Komponenten (A, B) zur Bildung eines Harzes unmittelbar vor dem Aufbringen,
• wobei das Harz eine kaltaushärtbare inerte Eigenschaft aufweist, das heißt, dass es kein Lösungsmittel enthält,
• Bilden einer ersten Schicht auf der zu beschichtenden Oberfläche **durch** Aufspritzen des Harzes mit mindestens zwei Komponenten (A, B) unter niedrigem Druck mittels der elektrostatischen Vorrichtung (30, 34, 35, 36),
• dann Bilden von mindestens einer unterschiedlichen und mit der ersten verbundenen zweiten Schicht **durch** Aufsprühen mindestens eines Werkstoffs mit einer dünnflüssigen Eigenschaft auf diese erste Harzschicht bevor diese erhärtet ist.

2. Verfahren nach Anspruch 1, **dadurch gekennzeichnet, dass** die Aufspritz- und Aufsprühvorgänge mindestens einmal erneut auf einer selben Oberfläche durchgeführt werden, um auf dieser mindestens zwei durch eine Werkstoffdicke bzw. ―stärke getrennte Harzschichten und mindestens zwei durch eine Harzschicht getrennte Werkstoffdicken zu erhalten.

3. Verfahren nach Anspruch 1, **dadurch gekennzeichnet, dass** der Werkstoff fest ist.

4. Verfahren nach Anspruch 3, **dadurch gekennzeichnet, dass** der feste Werkstoff mineralisch ist.

5. Verfahren nach Anspruch 4, **dadurch gekennzeichnet, dass** der feste und mineralische Werkstoff metallisch ist.

6. Verfahren nach Anspruch 3, **dadurch gekennzeichnet, dass** der feste Werkstoff pflanzlich ist.

7. Verfahren nach Anspruch 3, **dadurch gekennzeichnet, dass** der feste Werkstoff synthetisch ist.

8. Verfahren nach Anspruch 3, **dadurch gekennzeichnet, dass** der Werkstoff in Form von Fragmenten einer willkürlichen Komgrößenbestimmung zwischen einem feinen Puder und Grobsand vorliegt.

9. Verfahren nach Anspruch 1, **dadurch gekennzeichnet, dass** der Werkstoff pastenartig ist.

10. Verfahren nach Anspruch 1, **dadurch gekennzeichnet, dass** der Werkstoff flüssig ist.

11. Verfahren nach Anspruch 1, **dadurch gekennzeichnet, dass** der Werkstoff faserstoffhaltig ist.

12. Verfahren nach Anspruch 1, **dadurch gekennzeichnet, dass** das Harz in flüssiger Form mittels einer mechanischen Druckpumpe aufgesprüht wird.

13. Verfahren nach Anspruch 1, **dadurch gekennzeichnet, dass** das Harz mit mindestens zwei Komponenten (A und B) mittels ebenso vieler unterschiedlicher Pumpen (12 und 22) aufgesprüht wird.

14. Verfahren nach Anspruch 13, **dadurch gekennzeichnet, dass** die Komponenten (A und B) des Harzes mittels Pumpen (12 und 22) in Hochdruckausführung aufgesprüht werden, welche mit niedrigem Druck betrieben werden.

15. Verfahren nach Anspruch 14, **dadurch gekennzeichnet, dass** die Komponenten (A und B) in Strömungsrichtung hinter den Pumpen (12 und 22) durch unterschiedliche und individuell regelbare Vorrichtungen (14 und 24) erwärmt werden.

16. Verfahren nach Anspruch 1, **dadurch gekennzeichnet, dass** der Werkstoff mittels einer pneumatischen Zerstäubereinrichtung aufgesprüht wird.

17. Verfahren nach Anspruch 1, **dadurch gekennzeichnet, dass** der Werkstoff mittels einer elektrostatischen Aufsprüheinrichtung aufgebracht wird.

18. Verfahren nach Anspruch 1, **dadurch gekennzeichnet, dass** die Werkstoffe von unterschiedlichen Schichten unterschiedliche Eigenschaften aufweisen.

19. Verfahren nach Anspruch 1, **dadurch gekennzeichnet, dass** die Oberfläche die eines Isolierwerkstoffs ist.

20. Vorrichtung zur Beschichtung von Oberflächen mittels mehrerer Komponenten (A - B), welche Vortriebseinrichtungen und eine elektrostatische Vorrichtung (30, 34, 35, 36) zur Durchführung des Verfahrens nach Anspruch 1 aufweist.

21. Vorrichtung nach Anspruch 20, **dadurch gekennzeichnet, dass** die Vortriebseinrichtungen eine Pumpe (12 - 22) für jede Komponente (A - B) und eine Heizeinrichtung (14 - 24) für jede Komponente (A - B) aufweisen, welche individuell regelbar ausgebildet und in Strömungsrichtung hinter der zugehörigen Pumpe (12 - 22) angeordnet ist.

22. Vorrichtung nach Anspruch 21, **dadurch gekennzeichnet, dass** die Pumpen (12 und 22) an Auslassleitungen (13 und 23) angeschlossen sind, deren offene Enden konvergierend ausgebildet und von oben nach unten ausgerichtet sind, um ein Durchdringen der durch diese Enden fließenden Komponenten (A und B) durch natürliche Schwerkraft zu fördern.

23. Vorrichtung nach Anspruch 22, **dadurch gekennzeichnet, dass** sie eine Zentrifuge (30) mit einer Kammer (32) aufweist, die mit einem Motor (34) zum Antrieb einer Drehbewegung verbunden ist, wobei die konvergierenden Enden der Leitungen (13 und 23) durch eine axiale Öffnung (31) in die Kammer (32) einmünden.

24. Erzeugnis, von dem mindestens ein Teil bzw. Abschnitt der Oberfläche eine durch das Verfahren nach Anspruch 1 gebildete Beschichtung aufweist.

25. Erzeugnis nach Anspruch 24, **dadurch gekennzeichnet, dass** die Beschichtung mindestens eine ausgehärtete und inerte Harzschicht, das heißt frei von jeglichem Lösungsmittel, aufweist und eine äußere Schicht eines Werkstoffs aufweist, der unterschiedlich zu dem Harz und mit diesem verbunden ist.

26. Erzeugnis nach Anspruch 25, **dadurch gekennzeichnet, dass** der Werkstoff eine elektrisch isolierende Eigenschaft aufweist.

27. Erzeugnis nach Anspruch 25, **dadurch gekennzeichnet, dass** der Werkstoff ein elektrischer Leiter ist.

28. Erzeugnis nach Anspruch 27, **dadurch gekennzeichnet, dass** der Werkstoff als elektrischer Leiter gleichmäßig widerstandsfähig ausgebildet ist, um Sitz des Jouleeffekts sein zu können, und vorteilhaft mit einer Schutzschicht überdeckt ist.

29. Erzeugnis nach Anspruch 27, **dadurch gekennzeichnet, dass** der Werkstoff als elektrischer Leiter eine magnetisierbare Eigenschaft aufweist.

30. Erzeugnis nach Anspruch 27, **dadurch gekennzeichnet, dass** es durch ein Kabel zum Transport von elektrischer Energie gebildet ist, insbesondere eine Fahrleitung.

31. Erzeugnis nach Anspruch 29, **dadurch gekennzeichnet, dass** es selbst aus einem elektrisch isolierenden Werkstoff gebildet ist.

32. Erzeugnis nach Anspruch 29, **dadurch gekennzeichnet, dass** es selbst aus einem bestrahlten Werkstoff gebildet ist.

33. Erzeugnis nach Anspruch 29, **dadurch gekennzeichnet, dass** es individuell ausgebildet ist.

34. Erzeugnis nach Anspruch 33, **dadurch gekennzeichnet, dass** es von zwei zusammengefügten planen Teilen gebildet ist, insbesondere Bleche, zwischen denen eine Elastomerschicht ohne Lösungsmittel angeordnet ist.

35. Erzeugnis nach Anspruch 34, **dadurch gekennzeichnet, dass** das Elastomer Chargen bzw. Füllstoffe enthält.

36. Erzeugnis nach Anspruch 35, **dadurch gekennzeichnet, dass** die Füllstoffe Isoliereigenschaften aufweisen, insbesondere zur Schallisolierung.

37. Erzeugnis nach Anspruch 35, **dadurch gekennzeichnet, dass** die Füllstoffe das Schweißen bzw. Löten fördern.

38. Erzeugnis nach Anspruch 29, **dadurch gekennzeichnet, dass** es von mehreren Bauteilen gebildet ist, welche ihm komplexe Formen geben, deren Oberflächen mindestens teilweise beschichtet sind.

39. Erzeugnis nach Anspruch 38, **dadurch gekennzeichnet, dass** es ein Rohr bildet, welches eine Hülse bzw. Muffe mit unterschiedlichem Querschnitt aufweist, die eine spezifisch hochwertigere Oberfläche als die des Rohrs aufweist, und die nur mit Bruchteilen ihrer Oberfläche mit der inneren Wand des Rohrs in Kontakt steht.

40. Erzeugnis nach Anspruch 38, **dadurch gekennzeichnet, dass** es durch die Verbindung von gekreuzten Fäden gebildet ist, um ein Gitter, ein Geflecht oder dergleichen zu bilden.

41. Erzeugnis nach Anspruch 40, **dadurch gekennzeichnet, dass** es zur Bewehrung von Beton vorgesehen ist.

42. Erzeugnis nach Anspruch 38, **dadurch gekennzeichnet, dass** es ein Konstruktionsbauteil bildet.

43. Erzeugnis nach Anspruch 42, **dadurch gekennzeichnet, dass** es transparent ist und eine Wandung wie eine Fensterscheibe bildet.

44. Erzeugnis nach Anspruch 42, **dadurch gekennzeichnet, dass** es lichtdurchlässig ist und eine Wandung wie ein Oberlicht bzw. eine Laterne bildet.

45. Erzeugnis nach Anspruch 25, **dadurch gekennzeichnet, dass** es selbst eine biegsame Eigenschaft aufweist, wobei die Beschichtung starr ausgebildet ist.

## Claims

1. Process for cladding of surfaces using several constituents (A, B) using electrostatic means, **characterised in that**
• constituents (A, B) are conveyed separately using electrostatic means (30, 34, 35, 36) at low pressure and at a low flow speed,
• constituents (A, B) are thoroughly mixed at the last moment before being sprayed in order to obtain a resin,
• with the resin being of a cold-setting, inert type, i.e. solvent-free.
• an initial layer is formed on the surface to be clad by spraying the resin comprising at least 2 constituents (A, B) by means of said electrostatic means (30, 34, 35, 36),
• next, at least one second separate layer, which is rigidly joined to the first layer, is formed by atomising at least one fluid-type material on top of the initial layer of resin before this has set.

2. Process according to claim 1, **characterised in that** the spraying and atomising operations are repeated at least once on the same surface in order to obtain at least 2 layers of resin thereon separated by one thickness of material and at least two thicknesses of material separated by one layer of resin.

3. Process according to claim 1, **characterised in that** the material is a solid.

4. Process according to claim 3, **characterised in that** the solid material is mineral.

5. Process according to claim 4, **characterised in that** the solid mineral material is metallic.

6. Process according to claim 3, **characterised in that** the solid material is of plant origin.

7. Process according to claim 3, **characterised in that** the solid material is synthetic.

8. Process according to claim 3, **characterised in that** the material is presented in the form of fragments whose particles may be of any size ranging from fine powder to coarse sand.

9. Process according to claim 1, **characterised in that** the material is semi-solid.

10. Process according to claim 1, **characterised in that** the material is liquid.

11. Process according to claim 1, **characterised in that** the material is fibrous.

12. Process according to claim 1, **characterised in that** the resin is atomised in liquid form by means of an impeller pump.

13. Process according to claim 1, **characterised in that** the resin comprising at least 2 constituents (A and B) is atomised using the same number of separate pumps (12 and 22).

14. Process according to claim 13, **characterised in that** the resin's constituents (A and B) are atomised by means of "high-pressure" type pumps (12 and 22), which are operated at low pressure.

15. Process according to claim 14, **characterised in that** constituents (A and B) are heated downstream of pumps (12 and 22) using separate means (14 and 24) which can be individually adjusted.

16. Process according to claim 1, **characterised in that** the material is sprayed using a pneumatic atomiser.

17. Process according to claim 1, **characterised in that** the material is applied by means of electrostatic spraying.

18. Process according to claim 1, **characterised in that** the materials in the layers are of different types.

19. Process according to claim 1, **characterised in that** the surface is that of an insulating material.

20. Device for surface cladding comprising several constituents (A-B) comprising means of propulsion and electrostatic means (30, 34, 35, 36) for the implementation of the process according to claim 1.

21. Device according to claim 20, **characterised in that** the means of propulsion comprise a pump (12-22) for each constituent (A-B) and a means of heating (14-24) for each constituent (A-B) which can be individually adjusted and is located downstream of the according pump (12-22).

22. Device according to claim 21, **characterised in that** pumps (12 and 22) are connected to outlet pipes (13 and 23) whose open ends are convergent and directed downwards from above in order to promote, by natural gravity, the intermingling of constituents (A and B) which flow through said ends.

23. Device according to claim 22, **characterised in that** it comprises a turbine (30) having a chamber (32) connected to a rotary drive motor (34), with the converging ends of pipes (13 and 23) leading into said chamber (32) via an axial opening (31).

24. Product whose surface comprises at least partly a cladding obtained by the process according to claim 1.

25. Product according to claim 24, **characterised in that** the cladding comprises at least one layer of set, inert resin, i.e. one which does not contain any solvent, and at least one external layer of a material which is separate from but rigidly joined to the resin.

26. Product according to claim 25, **characterised in that** the material is of an electrically insulating type.

27. Product according to claim 25, **characterised in that** the material is electrically conductive.

28. Product according to claim 27, **characterised in that** the electrically conductive material is also adequately resistant to allow the Joule effect to occur and is advantageously covered with a protective material.

29. Product according to claim 27, **characterised in that** the electrically conductive material is of a magnetisable type.

30. Product according to claim 27, **characterised in that** it comprises a power transmission cable, for example, an overhead contact line.

31. Product according to claim 29, **characterised in that** it is itself made from an electrically insulating material.

32. Product according to claim 29, **characterised in that** it is itself made from an irradiated material.

33. Product according to claim 29, **characterised in that** it is a simply shaped product.

34. Product according to claim 33, **characterised in that** it comprises two flat assembled sections, for example, sheets, between which there is a layer of solvent-free elastomer.

35. Product according to claim 34, **characterised in that** the elastomer comprises fillers.

36. Product according to claim 35, **characterised in that** the fillers possess insulating properties, for example for acoustic purposes.

37. Product according to claim 35, **characterised in that** the fillers have properties that facilitate welding.

38. Product according to claim 29, **characterised in that** it comprises several elements that give it a complex shape whose surfaces are at least partially clad.

39. Product according to claim 38, **characterised in that** it comprises a tube containing a sleeve with a different cross section, whose specific surface to mass ratio is larger than that of the tube and which is only in contact with the inner wall of the tube at certain points on its surface.

40. Product according to claim 38, **characterised in that** it is made up by the assembly of intersecting wires to form a grid, lattice or similar structure.

41. Product according to claim 40, **characterised in that** it is intended for the reinforcement of concrete.

42. Product according to claim 38, **characterised in that** it constitutes a building component.

43. Product according to claim 42, **characterised in that** it is transparent and comprises a panel such as a window.

44. Product according to claim 42, **characterised in that** it is translucent and comprises a panel such as a roof light.

45. Product according to claim 25, **characterised in that** it is flexible whereas the cladding is rigid.
